# EUROPEAN PATENT SPECIFICATION

(11) **EP 2 500 666 B1**
(45) Date of publication and mention of the grant of the patent: **22.04.2015**
(21) Application number: 12158811.5
(22) Date of filing: 09.03.2012
(51) Int. Cl.: F24F 11/00, F24F 3/12, F24F 1/00, F24F 13/22

(54) **Air-conditioning apparatus**
Klimaanlage
Appareil de climatisation d'air

(30) Priority: 14.03.2011 JP 2011055733
(43) Date of publication of application: 19.09.2012
(73) Proprietor: Mitsubishi Electric Corporation, Chiyoda-ku Tokyo 100-8310 (JP)
(72) Inventor: Tanabe, Nobutaka, Tokyo, 100-8310 (JP); Seki, Tatsuo, Tokyo, 100-8310 (JP)
(74) Representative: Ilgart, Jean-Christophe

(56) References cited:
- EP-A1- 1 918 651
- EP-A2- 1 431 676
- JP-A- 5 223 325
- JP-A- 2004 085 020

## Description

### [Technical Field]

The present disclosure relates to an air-conditioning apparatus and, more particularly, to an air-conditioning apparatus provided with a function of drying an indoor unit.

### [Background Art]

An intended purpose of an air-conditioning apparatus is to enable a user to carry out activities in a comfortable and healthy indoor environment. When indoor temperature and indoor humidity rises such as in the summer, cooling operation and dehumidifying operation of the air-conditioning apparatus are carried out. With these operations, the indoor temperature is lowered and the indoor humidity is reduced enabling the user to obtain a comfortable indoor environment.
However, by carrying out the cooling operation and the dehumidifying operation, cases arise in which dew condensation is formed on the interior of the indoor unit of the air-conditioning apparatus resulting in moisture content residing in the interior of the indoor unit. And there arises a risk of fungi and bacteria growing and breeding in the interior of the indoor unit by the residing moisture content. When fungi and bacteria grow and breed in the interior of the indoor unit, there are cases in which discomfort is caused to the user by the bad smell during the use of the air-conditioning apparatus and in which health hazard is created by release of allergens, such as fungal spore and remains of the fungi and bacteria, into the indoor space.

Accordingly, an air-conditioning apparatus has been proposed in which the growth of fungi and bacteria is suppressed by drying the moisture content residing in the interior of the indoor unit of the air-conditioning apparatus by means of a heating operation or a fanning operation after a cooling operation or a dehumidifying operation has been carried out (see, for example, Patent Literature 1). Note that a fanning operation is an operation in which the fan provided in the indoor unit undergoes operation without cooling or heating. The technique described in Patent Literature 1 automatically determines whether to perform a drying operation with heating operation or to perform a drying operation without heating operation on the basis of the indoor temperature and the operation time.

An air-conditioning apparatus has been further proposed having a function of carrying out a heating operation as a drying operation, detecting the indoor temperature at the start of the drying operation and the indoor temperature during the drying operation, and stopping the drying operation when the difference between the indoor temperature at the start of the drying operation and the indoor temperature during the drying operation becomes larger than a predetermined value (see, for example, Patent Literature 2). The technique described in Patent Literature 2 uses the heating operation rather than a fanning operation in order to shorten the operation time, and further ends the drying operation when the indoor temperature difference becomes larger than a predetermined value so as to suppress the amount of influence to the comfortability of the indoor environment.

### [Citation List]

### [Patent Literature]

Patent Literature 1: Japanese Unexamined Patent Application Publication No. 5-223325 (see, for example, Fig. 14)
Patent Literature 2: Japanese Unexamined Patent Application Publication No. 2004-85020 (see, for example, pages 2 and 3 and Fig. 10 of the Description).

### [Summary of Invention]

### [Technical Problem]

In conventional air-conditioning apparatuses such as the one described in Patent Literature 1, when the drying of moisture content residing in the interior of the indoor unit is carried out with the heating operation alone, discomfort to the user is disadvantageously caused due to degradation of the indoor environment caused by the increase in indoor temperature owing to the heating operation. On the other hand, when drying of moisture content residing in the interior of the indoor unit is carried out with the fanning operation alone, it will take a substantially long time in order to sufficiently dry the interior of the indoor unit. Since the operating time is long, the time in which noise is generated is long. Thus, disadvantageously, causes discomfort to the user.
Further, when the user does not want to increase the indoor temperature and the indoor humidity, or does not want noise to be generated, the user may set the setting such that drying operation is not carried out. In this case, the drying of the interior of the indoor unit, disadvantageously, cannot be carried out, in the first place.

The technique described in Patent Literature 2 has a function of stopping the heating operation when the indoor temperature difference between at the start of the heating operation and the indoor temperature during the heating operation becomes larger than a predetermined value. However, there are cases in which the temperature difference, set by the designer, believed as a temperature difference that can be generally tolerated is not tolerable by some users. This case, disadvantageously, causes discomfort to the user.
Furthermore, because the temperature difference, set by the designer, believed as a temperature difference that can be generally tolerated is not tolerable by some users, the user may set the setting such that drying operation is not carried out. In this case, the drying of the interior of the indoor unit, disadvantageously, cannot be carried out, in the first place.

The present disclosure has been made to overcome the above problems and an object thereof is to provide an air-conditioning apparatus that is capable of drying moisture content residing in an interior of an indoor unit by carrying out a drying operation, and further an air-conditioning apparatus capable of restraining a decrease in user comfortability owing to the drying operation.

### [Solution to Problem]

The air-conditioning apparatus according to the disclosure is an air-conditioning apparatus capable of carrying out a cooling operation and a heating operation with a refrigerant cycle constituted by a compressor, an indoor heat exchanger, an expansion valve, and an outdoor heat exchanger being connected by refrigerant piping; and capable of carrying out a drying operation for drying an indoor unit constituted by the indoor heat exchanger and an indoor fan supplying air to the indoor heat exchanger, the air-conditioning apparatus including: a setting means setting whether a drying operation with heating operation or a drying operation without heating operation is to be carried out; an drying operation menu determination means determining a menu of a drying operation on the basis of a setting of the setting means; and an air volume determination means determining and controlling a rotation speed of the indoor fan on the basis of a determination result of the drying operation menu determination means, in which the drying operation menu determination means configures the drying operation by combining a heating operation and at least either one of a fanning operation and a fan stop operation by the air volume determination means when the drying operation with heating operation is carried out, and configures the drying operation by combining a fanning operation and a fan stop operation by the air volume determination means when the drying operation without heating operation is carried out.

### [Advantageous Effects of Invention]

In the air-conditioning apparatus according to the disclosure, the user can select whether a drying operation with heating operation is to be carried out or whether a drying operation without heating operation is to be carried out, the moisture content residing in the interior of the indoor unit can be dried, and decrease in user comfortability can be restrained.

### [Brief Description of Drawings]

Fig. 1 is a diagram illustrating an exemplary system configuration of a controller of an air-conditioning apparatus according to Embodiment 1 of the disclosure.
Fig. 2 is a diagram illustrating an exemplary refrigerant circuit configuration of the air-conditioning apparatus according to Embodiment 1 of the disclosure.
Fig. 3 is a diagram showing electrical connections of the controller of the air-conditioning apparatus according to Embodiment 1 of the disclosure.
[Fig. 4] Fig. 4 is a flowchart to explain an operation of the controller shown in Fig. 3.
[Fig. 5] Fig. 5 is a flowchart to explain an operation of the controller shown in Fig. 3 when a drying operation with heating operation is carried out.
[Fig. 6] Fig. 6 is a flowchart to explain an operation of the controller shown in Fig. 3 when a drying operation without heating operation is carried out.
[Fig. 7] Fig. 7 is a flowchart to explain the operation of the controller shown in Fig. 3 when a heating operation is carried out.
[Fig. 8] Fig. 8 is a diagram illustrating an exemplary system configuration of an air-conditioning apparatus according to Embodiment 1 of the disclosure when provided with a wind direction determining device.
[Fig. 9] Fig. 9 is a diagram showing electrical connections of the controller of the air-conditioning apparatus according to Embodiment 1 of the disclosure when provided with an indoor temperature sensor.
[Fig. 10] Fig. 10 is a flowchart to explain the operation of the controller shown in Fig. 9 when a drying operation with heating operation is carried out.
[Fig. 11] Fig. 11 is a diagram explaining a display action of an indoor unit during a drying operation of the air-conditioning apparatus according to Embodiment 1 of the disclosure.
[Fig. 12] Fig. 12 is a diagram illustrating an exemplary system configuration of a controller of an air-conditioning apparatus according to Embodiment 2 of the disclosure.
[Fig. 13] Fig. 13 is a diagram showing electrical connections of the controller of the air-conditioning apparatus according to Embodiment 2 of the disclosure.
[Fig. 14] Fig. 14 is a flowchart to explain an operation of the controller shown in Fig. 13.
[Fig. 15] Fig. 15 is a diagram explaining a display action of a remote control during a drying operation of the air-conditioning apparatus according to Embodiment 2 of the disclosure.
[Fig. 16] Fig. 16 is a diagram illustrating an exemplary system configuration of an air-conditioning apparatus according to Embodiment 2 of the disclosure when provided with a wind direction determining device.
[Fig. 17] Fig. 17 is a diagram showing electrical connections of the controller of the air-conditioning apparatus according to Embodiment 2 of the disclosure when provided with an indoor temperature sensor.

### [Description of Embodiments]

Embodiment of the invention will be described below with reference to the drawings.

### Embodiment 1

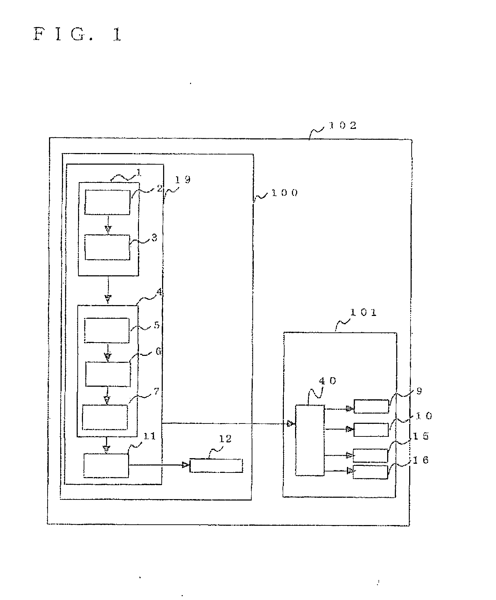

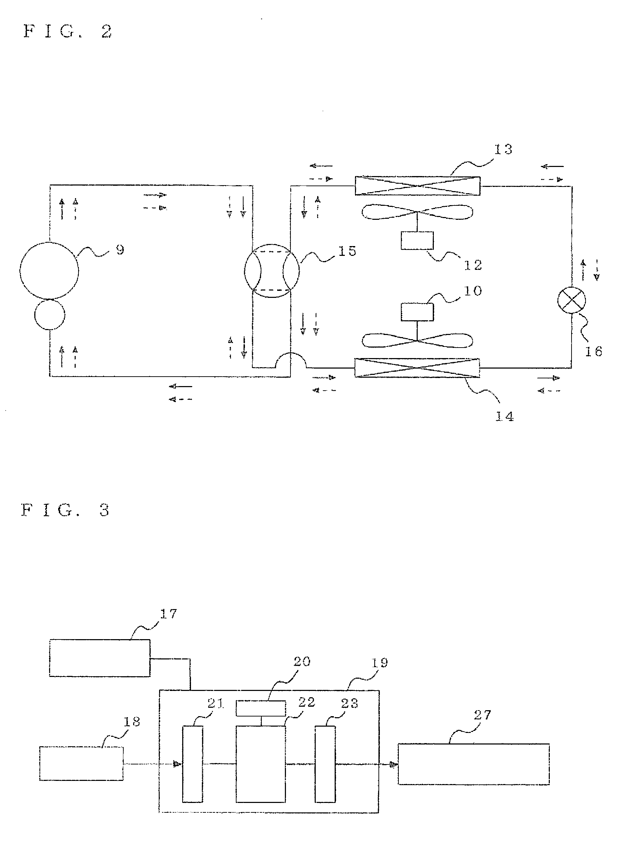

Fig. 1 is a diagram illustrating an exemplary system configuration of a controller of an air-conditioning apparatus 102 according to Embodiment 1 of the disclosure. Fig. 2 is a diagram illustrating an exemplary refrigerant circuit configuration of the air-conditioning apparatus 102 according to Embodiment 1 of the disclosure. The air-conditioning apparatus 102 has a function of restraining decrease in user comfortability while carrying out a drying operation for drying moisture content residing in an interior of an indoor unit 100.

### [System Configuration of Air-conditioning Apparatus 102]

A body of the air-conditioning apparatus 102 is constituted by the indoor unit 100 and an outdoor unit 101. This indoor unit 100 includes a controller 19 that controls the operation of the apparatus, and an indoor fan 12 that facilitates heat exchange of the subsequently described indoor heat exchanger 13 with an indoor air.
On the other hand, the outdoor unit 101 includes a compressor 9 that compresses a refrigerant circulating in a refrigeration cycle; an outdoor fan 10 that facilitates heat exchange of the outdoor heat exchanger 14 with an outdoor air; a four-way valve 15 that switches passages of the refrigerant circuit; an expansion valve 16 that decompresses and expands the refrigerant; and an outdoor unit controller 40 that controls a rotation speed of the compressor 9, an air volume of the outdoor fan 10, switching of the four-way valve, and a throttle opening of the expansion valve 16. Note that although the outdoor unit 101 of the air-conditioning apparatus 102 according to Embodiment 1 is provided with the expansion valve 16, this does not particularly limit the embodiment. For example, when the expansion valve 16 is provided in the indoor unit 100, instead of the outdoor unit controller 40, the controller 19 may control the expansion valve 16. Note that when the expansion valve 16 is one that does not change its throttle opening or does not need to change its throttle opening, the expansion valve 16 does not need to be controlled.

The controller 19 of the air-conditioning apparatus 102 according to Embodiment 1 controls the operation of the compressor 9, outdoor fan 10, and the indoor fan 12 in accordance with each of the operations such as a heating operation, a cooling operation, a dehumidifying operation, and the drying operation. This controller 19 includes heating operation permit/forbid determination means 1, which determines if heating operation will be included in the drying operation; drying operation menu determination means 4, which determines the operation menu of the drying operation; and air volume determination means 11, which determines the rotation speed of the indoor fan 12 and controls the air volume of the indoor fan 12.

The heating operation permit/forbid determination means 1 determines whether drying operation with heating operation is to be carried out or whether drying operation without heating operation is to be carried out, and outputs the determination result to the drying operation menu determination means 4. This heating operation permit/forbid determination means 1 includes storage means 2, which stores the configuration setting that is inputted from the setting means 18 (described subsequently) for setting whether drying operation with heating operation is to be carried out or whether drying operation without heating operation is to be carried out; and heating operation permit/forbid ascertaining means 3, which outputs whether drying operation with heating operation is to be carried out or whether drying operation without heating operation is to be carried out, on the basis of the stored configuration setting, to the drying operation menu determination means 4 (described subsequently). That is, the heating operation permit/forbid determination means 1 stores the setting inputted from the setting means 18 (described subsequently) and outputs the stored setting to the drying operation menu determination means 4. Note that in the air-conditioning apparatus 102 according to Embodiment 1, the setting means 18 is provided in the indoor unit 100 and is constituted by a button, a switch, or the like.

Based on the determination result of the heating operation permit/forbid determination means 1, the drying operation menu determination means 4 determines the menu of the drying operation, determines the duration of the drying operation, and measures the drying operation time. This drying operation menu determination means 4 includes operation menu determination means 5, which determines the menu of the drying operation; operation duration determination means 6, which determines the duration of each operation constituting the drying operation; and operation time measuring means 7, which measures the time of each operation constituting the drying operation from each start.
Note that "operation menu determination" denotes the operation menu determination means 5 configuring the drying operation by combining the heating operation, a fan stop, and a fanning operation. For example, when the operation menu determination means 5 receives output that the drying operation without heating operation is to be carried out from the heating operation permit/forbid determination means 1, the menu of the drying operation is determined by combination of the fan stop and the fanning operation.

The air volume determination means 11 determines the rotation speed of the indoor fan 12 on the basis of the determination result of the menu of the drying operation and the determination result of the duration of the drying operation determined by the drying operation menu determination means 4, and controls the air volume of the indoor fan 12. For example, the air volume determination means 11 may determine the rotation speed of the indoor fan 12 such that the rotation speed of the indoor unit during the drying operation without heating operation is larger than the drying operation with heating operation.
That is, during the drying operation with heating operation, by operating with a suppressed rotation speed of the indoor fan 12, the supply of heating air to the indoor can be suppressed, and, thus, decrease in user comfortability can be restrained. On the other hand, during the drying operation without heating operation, by operating with an increased rotation speed of the indoor fan, the drying of the indoor unit 100 can be accelerated. Accordingly, drying time will be reduced and the generating time of noise will be proportionately short, and, thus, decrease in user comfortability can be restrained.
Note that the determination of the rotation speed of the indoor fan 12 is not limited to this. For example, the air volume determination means 11 may determine the rotation speed of the indoor fan 12 according to the configuration setting stored in the storage means 2 (the memory 20 described subsequently).

The outdoor unit controller 40 controls at least the compressor 9 and the outdoor fan 10. This outdoor unit controller 40 is capable of communicating information with the controller 19 provided in the indoor unit 100 through a hard wired signal line. That is, while carrying out heating operation, information on performing the heating operation is transmitted from the controller 19 to the outdoor unit controller 40. Additionally, the outdoor unit controller 40 controls at least the compressor 9 and the outdoor fan 10 on the basis of the information on performing the heating operation.

### [Refrigerant Circuit Configuration of Air-conditioning Apparatus 102]

As shown in Fig. 2, the air-conditioning apparatus 102 includes the compressor 9 that compresses the refrigerant circulating in the refrigeration cycle, the four-way valve 15 that switches passages of the refrigerant circuit, the outdoor heat exchanger 14 that exchanges heat between the outdoor air and the refrigerant, the expansion valve 16 that decompresses and expands the refrigerant, and the indoor heat exchanger 13 that exchanges heat between the indoor air and the refrigerant. In addition, these are connected by refrigerant piping and constitute a refrigeration cycle.
Furthermore, the outdoor fan 10 that facilitates heat exchange between the outdoor air and the refrigerant is disposed in the outdoor heat exchanger 14, and the indoor fan 12 that facilitates heat exchange between the indoor air and the refrigerant is disposed in the indoor heat exchanger 12.

The compressor 9 sucks in the refrigerant, compresses the refrigerant into a high-temperature high-pressure state, and conveys the refrigerant to the refrigerant circuit. During the cooling operation, one side of this compressor 9 is connected to the outdoor heat exchanger 14 through the four-way valve 15, and the other side is connected to the indoor heat exchanger 13 through the four-way valve 15. The compressor 9 may include a capacity-controllable inverter compressor, for example.
The four-way valve 15 switches flows between the refrigerant flow during the heating operation and the refrigerant flow during the cooing operation. During the heating operation, this four-way valve 15 connects the discharge side of the compressor 9 to the indoor heat exchanger 13, as well as connecting the suction side of the compressor 9 to the outdoor heat exchanger 14 (see the broken line arrows in Fig. 2). Further, during the cooling operation, the four-way valve 15 connects the discharge side of the compressor 9 to the outdoor heat exchanger 14, as well as connecting the suction side of the compressor 9 to the indoor heat exchanger 13 (see the solid line arrows in Fig. 2).

The outdoor heat exchanger 14 functions as an evaporator during the heating operation and functions as a radiator (gas cooler) during the cooling operation, and exchanges heat between the outdoor air supplied by the outdoor fan 10 and the refrigerant. One side of this outdoor heat exchanger 14 is connected to the four-way valve 15 and the other side is connected to the expansion valve 16. The outdoor heat exchanger 14 may include, for example, a plate fin and tube heat exchanger that is capable of exchanging heat between the refrigerant flowing in the refrigerant piping and the air passing through the fins.
The expansion valve 16 decompresses and expands the refrigerant circulating in the refrigerant circuit. This expansion device 16 may include a component having a variably controllable opening degree, such as an electronic expansion valve.
The indoor heat exchanger 13 functions as a radiator during the heating operation and functions as an evaporator during the cooling operation, and exchanges heat between the air supplied by the indoor fan 12 and the refrigerant to generate air for heating, air for cooling, or air for the drying operation that is supplied to a conditioned space. The indoor heat exchanger 13 may include, for example, a plate fin and tube heat exchanger that is capable of exchanging heat between the refrigerant flowing in the refrigerant piping and the air passing through the fins.

### [Operation of Refrigeration Cycle of Air-Conditioning Apparatus 102]

With reference to Fig. 2, an operation of the refrigeration cycle of the refrigerant circuit shown in the same figure will be described.
In Fig. 2, the refrigerant in the refrigerant circuit flows in the direction of the arrows indicated by solid lines during the cooling operation and the dehumidifying operation, and on the other hand, the refrigerant in the refrigerant circuit flows in the direction of the arrows indicated by dotted lines during heating operation.

First, description will be given on the cooling operation and the dehumidifying operation. At the start of the cooling operation or the dehumidifying operation, the four-way valve switches the passages so that the refrigerant in the refrigerant circuit flows in the direction indicated by the solid lines in Fig. 2. The gas refrigerant that has been compressed by and discharge from the compressor 9 flows into the outdoor heat exchanger 14 through the four-way valve 15. This gas refrigerant that has flowed into the outdoor heat exchanger 14 is made to exchange heat with the outdoor air provided from the outdoor fan 10, is condensed, and flows out of the outdoor heat exchanger 14. This refrigerant that has flowed out of the outdoor heat exchanger 14 flows into the expansion valve 16, and is expanded and decompressed by this expansion valve 16. The refrigerant that has been decompressed flows into the indoor heat exchanger 13, is made to exchange heat with the indoor air provided from the indoor fan 12, is gasified, and flows out of the indoor heat exchanger 13. This gas refrigerant that has flowed out of the indoor heat exchanger 13 is sucked into the compressor 9 through the four-way valve 15.

Subsequently, description will be given on the heating operation. At the start of the heating operation, the four-way valve switches the passages so that the refrigerant in the refrigerant circuit flows in the direction indicated by the broken lines in Fig. 2. The gas refrigerant that has been compressed by and discharge from the compressor 9 flows into the indoor heat exchanger 13 through the four-way valve 15. This gas refrigerant that has flowed into the indoor heat exchanger 13 is made to exchange heat with the indoor air provided from the indoor fan 12, is condensed, and flows out of the indoor heat exchanger 13. This refrigerant that has flowed out of the indoor heat exchanger 13 flows into the expansion valve 16, and is expanded and decompressed by this expansion valve 16. The refrigerant that has been decompressed flows into the outdoor heat exchanger 14, is made to exchange heat with the outdoor air provided from the outdoor fan 10, is gasified, and flows out of the outdoor heat exchanger 14. This gas refrigerant that has flowed out of the outdoor heat exchanger 14 is sucked into the compressor 9 through the four-way valve 15.

Fig. 3 is a diagram showing electrical connections of the controller 19 of the air-conditioning apparatus 102 according to Embodiment 1 of the disclosure. The controller 19 controls at least the air volume and the like of the compressor 9, the outdoor fan 10, and the indoor fan 12. Note that in the subsequent description, the compressor 9, the outdoor fan 10, and the indoor fan 12 may be referred to as operation devices 27.
As shown in Fig.3, the controller 19 is connected to a power switch 17 for starting the air-conditioning apparatus 102. Further, the controller 19 is connected to the setting means 18, which sets whether drying operation with heating operation is to be carried out or whether drying operation without heating operation is to be carried out, and to the operation devices 27. According to the determination result of the setting means 18, the controller 19 can control the operation devices 27. Note that the controller 19 may include a microcomputer or the like.

The controller 19 includes an input circuit 21 that receives signals into the controller 19, a memory 20 for storing various data, a CPU having an arithmetic logical unit and a control unit, and an output circuit 23 that outputs the processed results of the CPU to the operation devices 27. The input circuit 21 receives the signal outputted from the setting means 18 and the like and outputs the signal to the CPU 22. The memory 20 stores a heating operation permit/forbid determination program of the drying operation and a drying operation determination program. The CPU 22 performs arithmetic processing and decision process of the control value and outputs the processed results to the output circuit 23. In order to control the operation devices 27, the output circuit 23 converts the arithmetic processing result and the decision processing result into an actuator output format and outputs them to the operation devices 27. Note that the memory 20 corresponds to the storage means 2, and the CPU 22 corresponds to the heating operation permit/forbid ascertaining means 3, drying operation menu determination means 4, and the air volume determination means 11.

### [Description of Drying Operation]

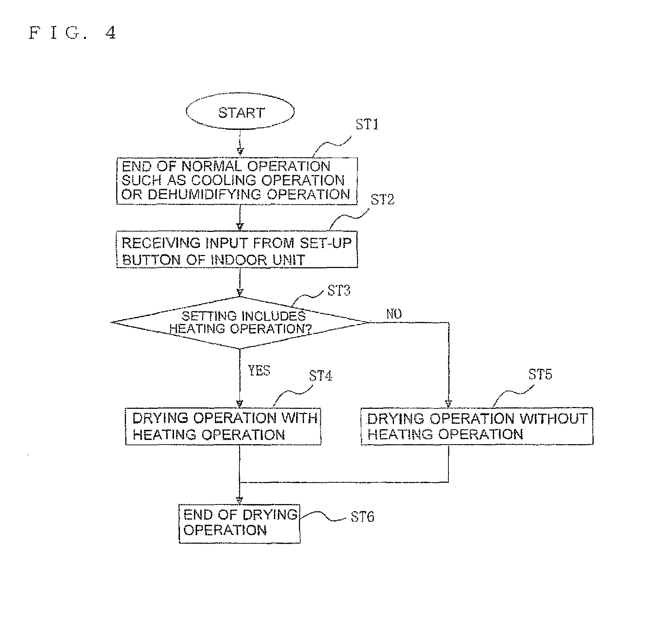

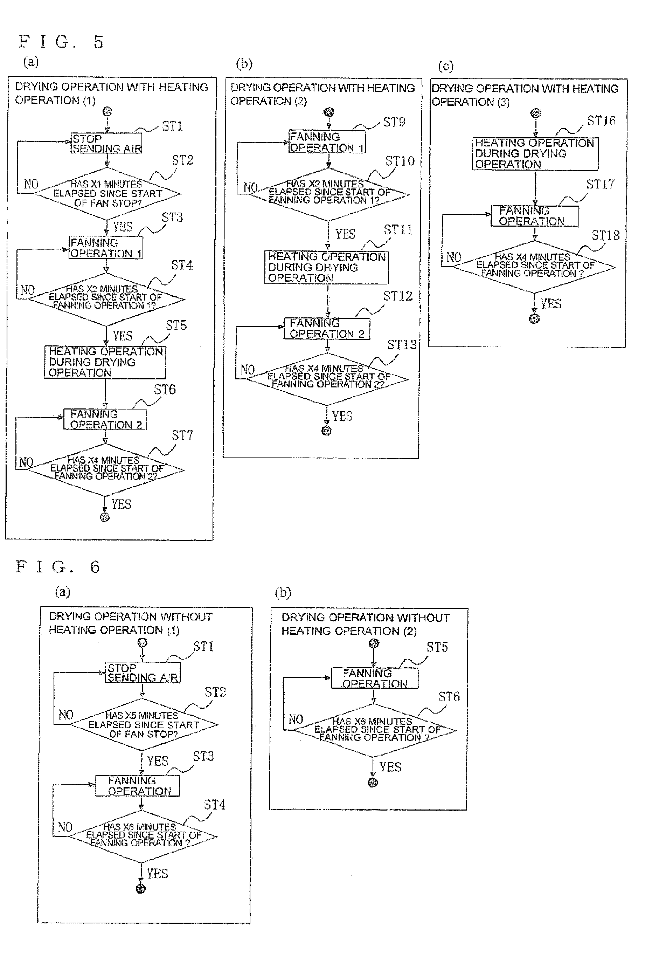

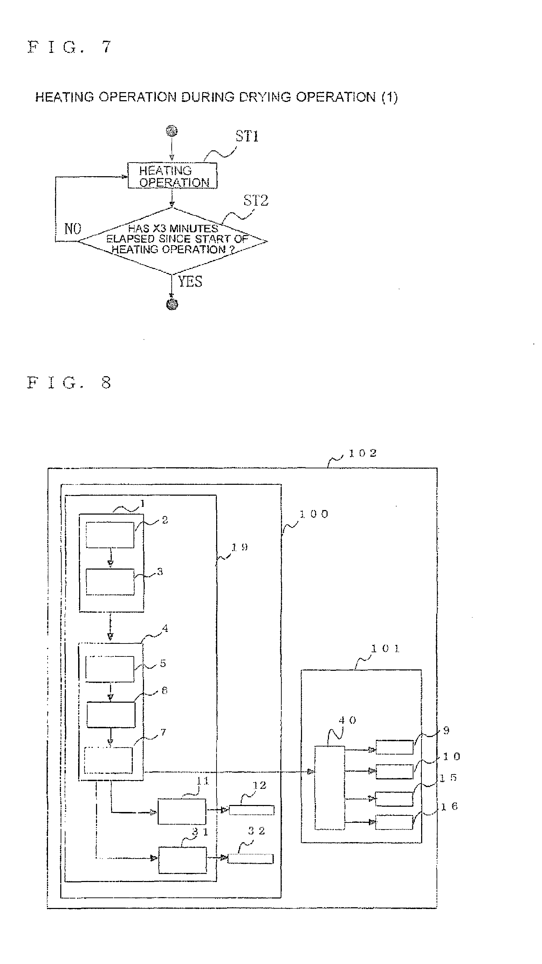

Fig. 4 is a flowchart to explain the operation of the controller 19 shown in Fig. 3. Fig. 5 is a flowchart to explain the operation of the controller 19 shown in Fig. 3 when the drying operation with heating operation is carried out. Fig. 6 is a flowchart to explain an operation of the controller shown in Fig. 3 when the drying operation without heating operation is carried out. Fig. 7 is a flowchart to explain the operation of the controller 19 shown in Fig. 3 when the heating operation is carried out. Subsequently, operation of the drying operation of the air-conditioning apparatus 102 according to Embodiment 1 will be described with reference to Figs. 3 to 7.
Note that "normal operation" denotes the cooling operation, the dehumidifying operation, or the heating operation without a drying purpose. Further, "fan stop" is a state in which air is not blown with the rotation speed of the indoor fan 12 set to zero by the control of the air volume determination means 11. Furthermore, "fanning operation" is a state in which the indoor fan 12 is made to operate and blow air by the control of the air volume determination means 11 of the controller 19. Additionally, heating operation is a state in which the connection of the four-way valve 15 is that of the heating operation, the compressor 9 and the outdoor fan 10 is in operation, and as required, the indoor fan 12 is in operation.

First, the operation of the drying operation of the air-conditioning apparatus 102 will be described with reference to Fig. 4.

### (ST1)

The controller 19 stops the compressor 9 and the outdoor fan 10 with the end of the normal operation such as the cooling operation, the dehumidifying operation, or the heating operation. Further, the air volume determination means 11 of the controller 19 stops the indoor fan 12.

### (ST2)

The controller 19 receives the setting of the setting means 18 at ST1 (at the ending of the normal operation).

### (ST3)

The heating operation permit/forbid determination means 1 of the controller 19 determines whether a drying operation with heating operation is to be carried out or whether a drying operation without heating operation is to be carried out on the basis of the setting of step ST2. Note that when a drying operation with heating operation is to be carried out, the process proceeds to step ST4, and when a drying operation without heating operation is to be carried out, the process proceeds to step ST5.

### (ST4)

When it is verified in step ST3 that a drying operation with heating operation is to be carried out, the controller 19 starts the drying operation with heating operation. That is, in order to carry out the heating operation, the controller 19 operates the compressor 9 and the outdoor fan 10. Further, the air volume determination means 11 of the controller 19 operates the indoor fan 12 based on the air volume determined by the air volume determination means 11.

### (ST5)

When it is verified in step ST3 that a drying operation without heating operation is to be carried out, the controller 19 starts the drying operation without heating operation. That is, the air volume determination means 11 of the controller 19 operates the indoor fan 12 based on the air volume determined by the air volume determination means 11. Further, the compressor 9 and the outdoor fan 10 is kept stopped.

### (ST6)

When each operation constituting the drying operation is completed, the controller 19 stops the ones in operation among the compressor 9, outdoor fan 10, and the indoor fan 12.

Next, details of step ST4 in Fig. 4 (drying operation with heating operation) will be described with reference to Fig. 5. Note that in describing the details of step ST4 in Fig. 4, the flowchart, drying operation with heating operation (1) of Fig. 5(a), will be used.

### (ST1)

The air volume determination means 11 of the controller 19 stops the indoor fan 12. Note that the compressor 9 and the outdoor fan 10 is kept stopped.

### (ST2)

The operation time measuring means 7 determines whether x1 minutes has elapsed since the start of the fan stop. When it is determined that x1 minutes has elapsed, the process proceeds to step ST3.
Further, when it is determined that x1 minutes has not elapsed, the process returns to step ST1. That is, the air volume determination means 11 of the controller 19 continues the fan stop, and the operation time measuring means 7 continues counting the time from the start of the fan stop.

### (ST3)

Further, the air volume determination means 11 of the controller 19 operates the indoor fan 12 based on the air volume determined by the air volume determination means 11 in order to start the fanning operation. Note that the compressor 9 and the outdoor fan 10 is kept stopped.

### (ST4)

The operation time measuring means 7 determines whether x2 minutes has elapsed since the start of the fanning operation. When it is determined that x2 minutes has elapsed, the process proceeds to step ST5.
Further, when it is determined that x2 minutes has not elapsed, the process returns to step ST3. That is, the air volume determination means 11 of the controller 19 continues the fanning operation, and the operation time measuring means 7 continues counting the time from the start of the fanning operation.

### (ST5)

The air volume determination means 11 of the controller 19 stops the operation of the indoor fan 12 in order to stop the fanning operation. Further, the controller 19 starts the operation of the compressor 9 and the outdoor fan 10 in order to start the heating operation (heating operation during drying operation).

### (ST6)

The controller 19 stops the compressor 9 and the outdoor fan 10 in order to stop the heating operation. Further, the air volume determination means 11 of the controller 19 operates the indoor fan 12 based on the air volume determined by the air volume determination means 11 of the controller 19 in order to start the fanning operation 2.

### (ST6)

The operation time measuring means 7 determines whether x4 minutes has elapsed since the start of the fanning operation. When it is determined that x4 minutes has elapsed, the fanning operation 2 is ended. With the above, the drying operation is completed.
Further, when it is determined that x4 minutes has not elapsed, the process returns to step ST6. That is, the air volume determination means 11 of the controller 19 continues the fanning operation 2, and the operation time measuring means 7 continues counting the time from the start of the fanning operation 2.

Herein, details of step ST5 of the drying operation with heating operation (1) of Fig. 5 will be described with reference to Fig. 7.

### (ST1)

The controller 19 starts the operation of the compressor 9 and the outdoor fan 10 in order to start the heating operation (heating operation during drying operation).

### (ST2)

The operation time measuring means 7 determines whether x3 minutes has elapsed since the start of the fanning operation. When it is determined that x3 minutes has elapsed, the heating operation is ended.
Further, when it is determined that x3 minutes has not elapsed, the process returns to step ST1. That is, the controller 19 continues the heating operation, and the operation time measuring means 7 continues counting the time from the start of the heating operation.

Note that in Fig. 5, in addition to the drying operation with heating operation (1), flowcharts, drying operations with heating operation (2) and (3), are also illustrated by way of example. The air-conditioning apparatus 102 can obtain the same advantageous effects as that of the drying operation with heating operation (1) by carrying out the drying operation described in the drying operations with heating operation (2) and (3).

Herein, the differences between the drying operation with heating operation (1) of Fig. 5(a) and the drying operation with heating operation (2) of Fig. 5(b) are that the drying operation with heating operation (2) does not have the fan stop (ST1) and the condition to end the fan stop (ST2) that are included in the drying operation with heating operation (1). That is, steps ST3 to ST7 of the drying operation with heating operation (1) correspond to step ST9 to step ST 13 of the drying operation with heating operation (2).
Further, the differences between the drying operation with heating operation (1) of Fig. 5(a) and the drying operation with heating operation (3) of Fig. 5(c) are that the drying operation with heating operation (3) does not have the fan stop (ST1), the condition to end the fan stop (ST2), fanning operation 1 (ST3), and the condition to end the fanning operation 1 (ST4) that are included in the drying operation with heating operation (1). That is, it corresponds to step ST5 to step ST7 of the drying operation with heating operation (1).

Furthermore, the operation menu determination means 5 of the drying operation menu determination means 4 determines which drying operation is to be carried out among the drying operations with heating operation (1) to (3) of Fig. 5.
Note that the drying operations with heating operation (1) to (3) of Fig. 5 are examples of the drying operations with heating operation. That is, the operation menu determination means 5 in this case constitutes the drying operation by combining the heating operation, the fan stop, and the fanning operation so as to include the heating operation.
In addition, the operation menu determination means 5 may be omitted. In this case, the air-conditioning apparatus 102 may carry out drying operation according to a preset operation menu (with the heating operation included).
Additionally, the operation duration determination means 6 determines the operation time of each operation of the drying operation determined by the operation menu determination means 5. Furthermore, the operation time measuring means 7 measures the operation time of each operation.

Next, details of step ST5 in Fig. 4 (drying operation without heating operation) will be described with reference to Fig. 6. Note that in describing the details of step ST5 in Fig. 4, the flowchart, drying operation without heating operation (1) of Fig. 6(a), will be used.

### (ST1)

The air volume determination means 11 of the controller 19 stops the indoor fan 12. Note that the compressor 9 and the outdoor fan 10 is kept stopped.

### (ST2)

The operation time measuring means 7 determines whether x5 minutes has elapsed since the start of the fan stop. When it is determined that x5 minutes has elapsed, the process proceeds to step ST3.
Further, when it is determined that x5 minutes has not elapsed, the process returns to step ST1. That is, the air volume determination means 11 of the controller 19 continues the fan stop, and the operation time measuring means 7 continues counting the time from the start of the fan stop.

### (ST3)

Further, the air volume determination means 11 of the controller 19 operates the indoor fan 12 based on the air volume determined by the air volume determination means 11 in order to start the fanning operation. Note that the compressor 9 and the outdoor fan 10 is kept stopped.

### (ST4)

The operation time measuring means 7 determines whether x6 minutes has elapsed since the start of the fanning operation. When it is determined that x6 minutes has elapsed, the fanning operation is ended. With the above, the drying operation is completed.
Further, when it is determined that x6 minutes has not elapsed, the process returns to step ST3. That is, the air volume determination means 11 of the controller 19 continues the fanning operation, and the operation time measuring means 7 continues counting the time from the start of the fanning operation.

Note that in Fig. 6, in addition to the drying operation without heating operation (1), a flowchart, drying operation without heating operation (2), is also illustrated by way of example. The air-conditioning apparatus 102 can obtain the same advantageous effects as that of the drying operation without heating operation (1) by carrying out the drying operation described in the drying operation without heating operation (2).

Herein, the differences between the drying operation without heating operation (1) of Fig. 6(a) and the drying operation without heating operation (2) of Fig. 6(b) are that the drying operation without heating operation (2) does not have the fan stop (ST1) and the condition to end the fan stop (ST2) that are included in the drying operation without heating operation (1). That is, step ST3 and step ST4 of the drying operation without heating operation (1) correspond to step ST5 and step ST 6 of the drying operation without heating operation (2).

Furthermore, the operation menu determination means 6 of the drying operation menu determination means 4 determines which drying operation is to be carried out between the drying operations without heating operation (1) and (2) of Fig. 6. Note that the drying operation without heating operation (1) of Fig. 6 is an example of the drying operations without heating operation. That is, the operation menu determination means 5 in this case constitutes the drying operation by combining the fan stop and the fanning operation so as to not include the heating operation.
In addition, the operation menu determination means 5 may be omitted. In this case, the air-conditioning apparatus 102 may carry out drying operation according to a preset operation menu (with the heating operation excluded).

### [Advantageous Effects of Air-Conditioning Apparatus]

As described above, in the air-conditioning apparatus 102 according to Embodiment 1, the user can select whether a drying operation with heating operation is to be carried out or whether a drying operation without heating operation is to be carried out, the moisture content residing in the interior of the indoor unit can be dried, and decrease in user comfortability can be restrained.

### [Variational Embodiment 1 of Air-conditioning Apparatus 102]

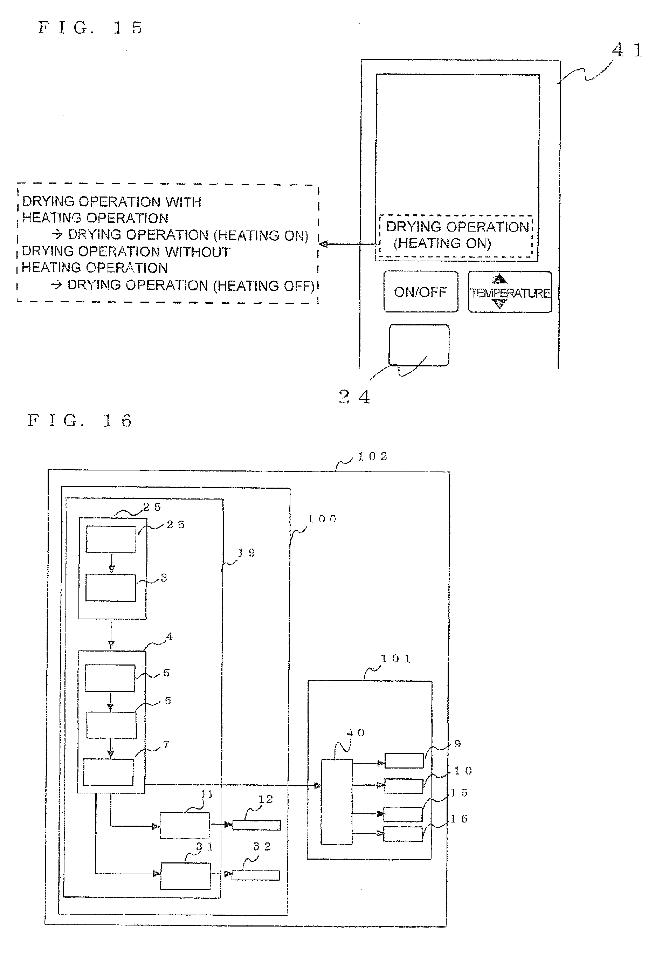

Fig. 16 is a diagram illustrating an exemplary system configuration of the air-conditioning apparatus 102 according to Embodiment 1 of the disclosure when provided with a wind direction determining device 31.
The air-conditioning apparatus 102 according to Embodiment 1 may employ a system configuration illustrated in Fig. 8 as an alternative of the system configuration illustrated in Fig. 1. That is, during the drying operation, the wind direction determining device 31 provided to the air-conditioning apparatus 102 may control the angle of a wind direction plate 32 provided in an air outlet of the indoor unit 100.
During the fanning operation 1, the fanning operation 2, and the heating operation illustrated in Figs. 5 to 7, by orienting the wind direction plate 32 upwards with the wind direction determining device 31, drying operation can be carried out while suppressing negative influence to the indoor environment. That is, by carrying out the drying operation, the residing moisture content in the interior of the indoor unit 100 can be dried, and with this drying operation, the decrease in user comfortability can be restrained.

### [Variational Embodiment 2 of Air-conditioning Apparatus 102]

Further, as illustrated in step ST5 of Fig. 4, when performing the drying operation without heating operation, compared to the drying operation with heating operation illustrated in step ST4 of Fig. 4, the moisture content residing in the indoor unit 100 cannot be dried without a longer operation time for the drying operation.
Accordingly, an ozone generator, which has an effect of suppressing growth and breeding of fungi and bacteria, may be provided to the indoor unit 100. By combining not only the drying operation without heating operation, but also the ozone generator, growth and breeding of fungi and bacteria in the moisture content residing in the interior of the indoor unit 100 can be suppressed.
Furthermore, preferably, the durability of the drying operation may be set so as to become shorter, and the ozone generator may be made to operate after the completion of the drying operation. Accordingly, the preset drying time can be reduced and the generating time of noise can be shortened, and, thus, decrease in user comfortability can be restrained. Additionally, even when moisture content resides, growth and breeding of fungi and bacteria can be suppressed with the ozone generator.

### [Variational Embodiment 3 of Air-conditioning Apparatus 102]

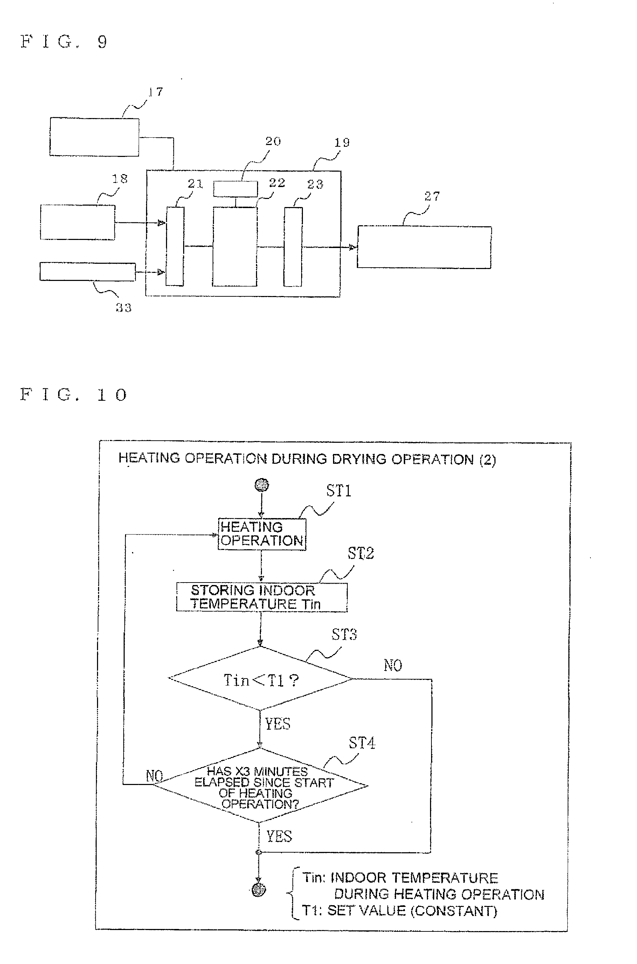

Fig. 9 is a diagram showing electrical connections of the controller 19 of the air-conditioning apparatus 102 according to Embodiment 1 of the disclosure when provided with an indoor temperature sensor 33. Fig. 10 is a flowchart to explain the operation of the controller 19 shown in Fig. 9 when the drying operation with heating operation is carried out.
As illustrated in Fig. 9, the air-conditioning apparatus 102 according to Embodiment 1 is provided with an indoor temperature sensor 33. Further, in addition to the setting means 18 provided in the indoor unit 100, the controller 19 controls the operation devices 27 on the basis of the detection result of the indoor temperature sensor 33. Note that the difference between Fig. 3 and Fig. 9 is that Fig. 9 is additionally provided with the indoor temperature sensor 33.

Furthermore, when the indoor temperature sensor 33 is provided, the operation menu determination means 5 may configure the drying operation as in the flowchart, heating operation during drying operation (2) of Fig. 10, instead of the flowchart, heating operation during drying operation (1) of Fig. 7. The difference between Fig. 10 and Fig. 7 is that Fig. 10 is additionally provided with step ST2, which stores the indoor temperature Tin during the heating operation, and with step ST3, which determines whether the indoor temperature Tin is smaller than a preset constant T1. That is, step ST1 and step ST4 of the heating operation during drying operation (2) of Fig. 10 correspond to step ST1 and step ST 2 of the heating operation during drying operation (1) of Fig. 7. Additionally, T1 of Fig. 10 may be a preset constant or may be a T1 that is set on the basis of a temperature before the start of the heating operation or a temperature at the end of the normal operation.
As such, even when the user has set to drying operation with heating operation, the air-conditioning apparatus 102 is ended on the basis of the indoor temperature, thus, the moisture content residing in the interior of the indoor unit can be dried and significant degradation of the indoor environment can be suppressed.

### [Variational Embodiment 4 of Air-conditioning Apparatus 102]

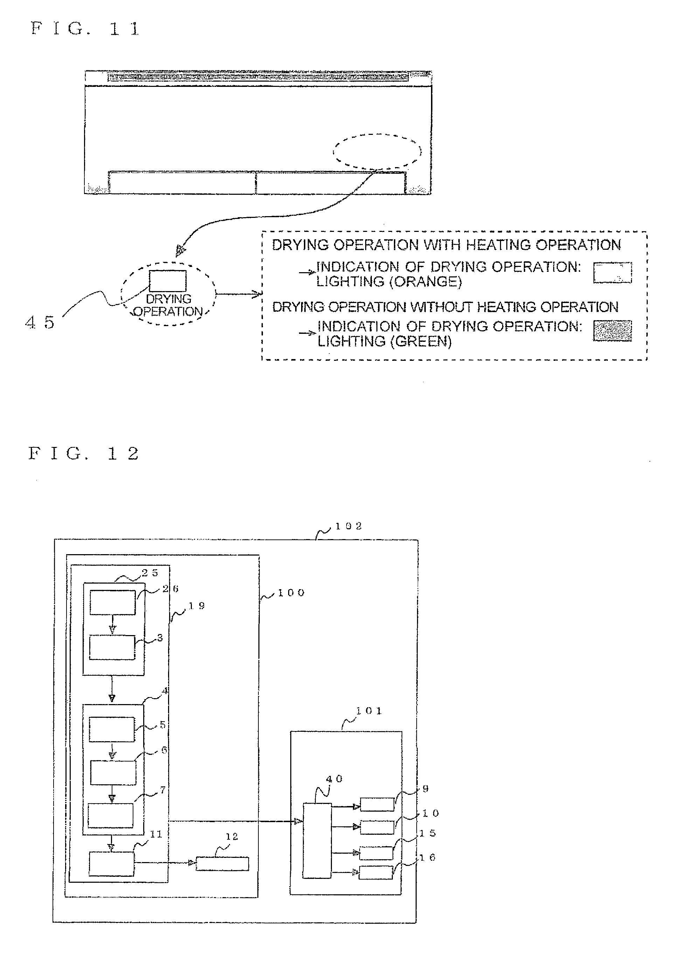

Fig. 11 is a diagram explaining a display action of the indoor unit during the drying operation of the air-conditioning apparatus according to Embodiment 1 of the disclosure. As illustrated in Fig. 11, a display unit 45 is preferably provided to the indoor unit 100 so that the user can recognize the setting of the drying operation. Note that in Fig. 11, a display action is illustrated by way of example, in which when drying operation with heating operation is set, the display unit 45 lights up in orange, and when drying operation without heating operation is set, the display unit 45 lights up in green.
Accordingly, the display unit 45 may, preferably, be displayed in the indoor unit 100 in accordance with the setting state of the drying operation. Note that Fig. 11 is an example of a display in the indoor unit 100 enabling the user to recognize the setting state, and the method of display is not limited to this. For example, this display for the user to recognize the setting state may be turned off after being displayed on the indoor unit 100 for a certain period of time.

As described above, in the air-conditioning apparatus 102 described in [Variational Embodiment 1 of Air-conditioning Apparatus 102] to [Variational Embodiment 4 of Air-conditioning Apparatus 102], the user can select whether a drying operation with heating operation is to be carried out or whether a drying operation without heating operation is to be carried out, the moisture content residing in the interior of the indoor unit can be dried, and decrease in user comfortability can be restrained.

### Embodiment 2

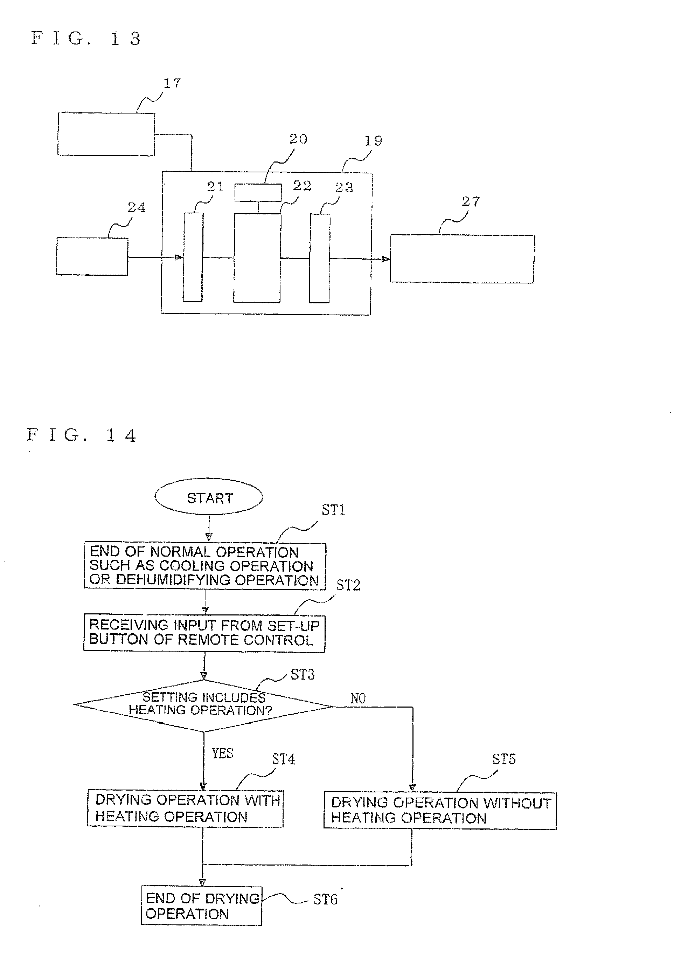

Fig. 12 is a diagram illustrating an exemplary system configuration of a controller 19 of an air-conditioning apparatus 102 according to Embodiment 2 of the disclosure. Fig. 13 is a diagram showing electrical connections of the controller 19 of the air-conditioning apparatus 102 according to Embodiment 2 of the disclosure. Fig. 14 is a flowchart to explain an operation of the controller 19 shown in Fig. 13. Fig. 15 is a diagram explaining a display action of a remote control 41 during a drying operation of the air-conditioning apparatus according to Embodiment 2 of the disclosure. Note that in Embodiment 2, same parts as Embodiment 1 will be referred to with the same reference numerals, and portions different to that of Embodiment 1 will be described.

As illustrated in Fig. 13 and Fig. 15, in the air-conditioning apparatus 102 according to Embodiment 2, instead of the setting means 18 of the air-conditioning apparatus 102 according to Embodiment 1, a setting means 24 is provided in the remote control 41 that controls an operation of the air-conditioning apparatus 102. Further, as illustrated in Fig. 12, the air-conditioning apparatus 102 according to Embodiment 2 includes a heating operation permit/forbid determination means 25 that outputs the setting that is inputted from the setting means 24 of the remote control 41. Furthermore, in the heating operation permit/forbid determination means 25 of the air-conditioning apparatus 102 according to Embodiment 2, instead of the storage means 2 of the air-conditioning apparatus 102 according to Embodiment 1, a storage means 26 that stores the configuration settings inputted from the setting means 24 is included. Note that the setting means 24 is preferably configured by a button, a switch, or the like. It goes without saying that a setting means 18 (see Fig. 3) may be provided to the indoor unit 100 along with the setting means 24 provided to the remote control 41.

Subsequently, operation of a drying operation of the air-conditioning apparatus 102 according to Embodiment 2 will be described with reference to Fig. 14.

### (ST1)

The controller 19 stops the compressor 9 and the outdoor fan 10 with the end of the normal operation such as the cooling operation, the dehumidifying operation, or the heating operation. Further, an air volume determination means 11 of the controller 19 stops an indoor fan 12.

### (ST2)

The controller 19 receives the setting of the setting means 41 at ST1 (at the ending of the normal operation).

### (ST3)

The heating operation permit/forbid determination means 25 determines whether a drying operation with heating operation is to be carried out or whether a drying operation without heating operation is to be carried out on the basis of the setting of step ST2. Note that when a drying operation with heating operation is to be carried out the process proceeds to step ST4, and when a drying operation without heating operation is to be carried out the process proceeds to step ST5.

### (ST4)

When it is verified in step ST3 that a drying operation with heating operation is to be carried out, the controller 19 starts the drying operation with heating operation. That is, in order to carry out a heating operation, the controller 19 operates a compressor 9 and an outdoor fan 10. Further, the air volume determination means 11 of the controller 19 operates the indoor fan 12 based on the air volume determined by the air volume determination means 11.

### (ST5)

When it is verified in step ST3 that a drying operation without heating operation is to be carried out, the controller 19 starts the drying operation without heating operation. That is, the air volume determination means 11 of the controller 19 operates the indoor fan 12 based on the air volume determined by the air volume determination means 11. Further, the compressor 9 and the outdoor fan 10 is kept stopped.

### (ST6)

When each operation constituting the drying operation is completed, the controller 19 stops the ones in operation among the compressor 9, outdoor fan 10, and the indoor fan 12.

Note that the details of Step ST4 of Fig. 14 corresponds to the flowchart of Fig. 5, and step ST5, step ST 11 and step ST 17 of Fig. 5 corresponds to the flowchart of Fig. 7. Further, the details of step ST 5 of Fig. 14 corresponds to the flowchart of Fig. 6. Accordingly, description will be omitted herein.

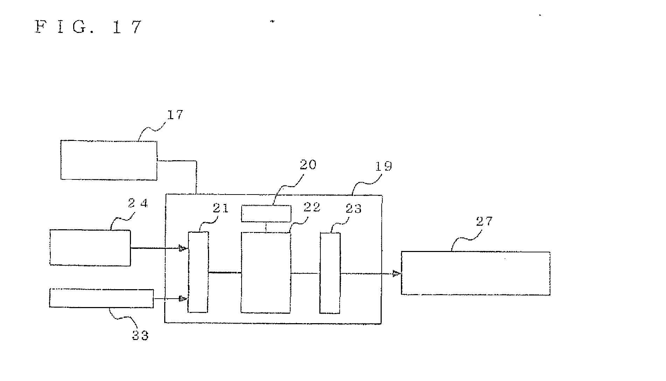

It is needless to say that the [Variational Embodiment 1 of Air-conditioning Apparatus 102] to [Variational Embodiment 4 of Air-conditioning Apparatus 102] described in Embodiment 1 can be applied to Embodiment 2. Fig. 16 and Fig. 17 are illustrated embodiments thereof, and detailed description will be omitted.
In the air-conditioning apparatus 102 according to Embodiment 2, also, the user can select whether a drying operation with heating operation is to be carried out or whether a drying operation without heating operation is to be carried out, the moisture content residing in the interior of the indoor unit can be dried, and decrease in user comfortability can be restrained.

### [Reference Signs List]

1. heating operation permit/forbid determination means; 2. storage means; 3. heating operation permit/forbid ascertaining means; 4. drying operation menu determination means; 5. operation menu determination means; 6. operation duration determination means; 7. operation time measuring means; 9. compressor; 10. outdoor fan; 11. air volume determination means; 12. indoor fan; 13. indoor heat exchanger; 14. outdoor heat exchanger; 15. four-way valve; 16. expansion valve; 17. power switch; 18. setting means; 19. controller; 20. memory; 21. input circuit; 22. CPU; 23. output circuit; 24. setting means; 25. heating operation permit/forbid determination means; 26. storage means; 27. operation device; 31. wind direction determining device; 32. wind direction plate; 33. indoor temperature sensor; 40. outdoor unit controller; 41. remote control; 45. display unit; 100. indoor unit; 101. outdoor unit; 102. air-conditioning apparatus.

## Claims

1. An air-conditioning apparatus (102) capable of carrying out a cooling operation and a heating operation with a refrigerant cycle constituted by a compressor (9), an indoor heat exchanger (13), an expansion valve (16), and an outdoor heat exchanger (14) being connected by refrigerant piping, and capable of carrying out a drying operation for drying an indoor unit (100) constituted by the indoor heat exchanger (13) and an indoor fan (12) supplying air to the indoor heat exchanger (13), the air-conditioning apparatus (102) comprising:
a setting means (18, 24) setting whether a drying operation with heating operation or a drying operation without heating operation is to be carried out;
a drying operation menu determination means (4) determining a menu of a drying operation on the basis of a setting of the setting means (18, 24); and
an air volume determination means (11) determining a rotation speed of the indoor fan (12) on the basis of a determination result of the drying operation menu determination means (4) and controlling an air volume of the indoor fan (12),
**characterised in that**
the drying operation menu determination means (4)
configures the drying operation by combining a heating operation and at least either one of a fanning operation and a fan stop operation by the air volume determination means (11) when the drying operation with heating operation is carried out, and
configures the drying operation by combining a fanning operation and a fan stop operation by the air volume determination means (11) when the drying operation without heating operation is carried out.

2. The air-conditioning apparatus (102) of claim 1, further comprising a heating operation permit/forbid determination means (1, 25) storing the setting inputted from the setting means (18, 24) and outputting the stored setting to the drying operation menu determination means (4).

3. The air-conditioning apparatus (102) of claim 1 or 2, wherein the setting means (18, 24) is provided in the indoor unit (100).

4. The air-conditioning apparatus (102) of claim 3, the indoor unit (100) comprising a display unit (45) capable of displaying by means of lighting, the display unit (45) lighting up different colors on the basis of the setting of the setting means (18, 24).

5. The air-conditioning apparatus (102) of any one of claims 1 to 4, further comprising a remote control (41), the remote control (41) being provided with the setting means (18, 24).

6. The air-conditioning apparatus (102) of claim 5, the remote control (41) comprising a display unit (45) for displaying information, the display unit (45) displaying information on the basis of the setting of the setting means (18, 24).

7. The air-conditioning apparatus (102) of any one of claims 2 to 6, further comprising
a wind direction plate (32) changing a direction of an air blown out from the indoor fan (12), and
a controller (19) including the heating operation permit/forbid determination means (1, 25) and the drying operation menu determination means (4), the controller (19) controlling an angle of the wind direction plate (32), wherein
the controller (19) sets the wind direction plate (32) upward during the drying operation.

8. The air-conditioning apparatus (102) of claim 7, further comprising an indoor temperature sensor (33) that detects an indoor temperature, wherein
the controller (19) configures the menu of the drying operation on the basis of the detection result of the indoor temperature sensor (33).

9. The air-conditioning apparatus (102) of any one of claims 1 to 8, wherein the air volume determination means (11) determines the rotation speed of the indoor fan (12) such that the rotation speed of the indoor unit (100) during the drying operation without heating operation is larger than the drying operation with heating operation.

## Patentansprüche

1. Klimaanlage (102), die in der Lage ist, einen Kühlvorgang und einen Heizvorgang mit einem Kältemittel durchzuführen, die durch einen Kompressor (9), einen Innenwärmetauscher (13), ein Expansionsventil (16) und einen Außenwärmetauscher (14), die durch Kältemittelleitungen verbunden sind, gebildet ist, und die in der Lage ist, einen Trocknungsvorgang zum Trocknen einer Inneneinheit (100), die durch den Innenwärmetauscher (13) und einen Innenventilator (12), der Luft zu dem Innenwärmetauscher (13) liefert, gebildet ist, durchzuführen, welche Klimaanlage (102) aufweist:
Einstellmittel (18, 24), die einstellen, ob ein Trocknungsvorgang mit einem Heizvorgang oder ein Trocknungsvorgang ohne einen Heizvorgang durchzuführen ist;
Trocknungsvorgangsmenü-Bestimmungsmittel (4), die ein Menü für einen Trocknungsvorgang auf der Grundlage eines Einstellens der Einstellmittel (18, 24) bestimmen; und
Luftvolumen-Bestimmungsmittel (11), die eine Drehgeschwindigkeit des Innenventilators (12) auf der Grundlage eines Bestimmungsergebnisses der Trocknungsvorgangsmenü-Bestimmungsmittel (4) bestimmen und ein Luftvolumen des Innenventilators (12) steuern,
**dadurch gekennzeichnet, dass**
die Trocknungsvorgangsmenü-Bestimmungsmittel (4) den Trocknungsvorgang konfigurieren durch Kombinieren eines Heizvorgangs und zumindest entweder eines Ventilationsvorgangs oder eines Ventilatoranhaltevorgangs durch die Luftvolumen-Bestimmungsmittel (11), wenn der Trocknungsvorgang mit Heizvorgang durchgeführt wird, und
den Trocknungsvorgang konfigurieren durch Kombinieren eines Ventilationsvorgangs und eines Ventilatoranhaltevorgangs durch die Luftvolumen-Bestimmungsmittel (11), wenn der Trocknungsvorgang ohne Heizvorgang durchgeführt wird.

2. Klimaanlage (102) nach Anspruch 1, weiterhin aufweisend Heizvorgangs-Zulassungs-/Untersagungs-Bestimmungsmittel (1, 25), die die von den Einstellmitteln (18, 24) eingegebene Einstellung speichern und die gespeicherte Einstellung zu den Trocknungsvorgangsmenü-Bestimmungsmitteln (4) ausgeben.

3. Klimaanlage (102) nach Anspruch 1 oder 2, bei der die Einstellmittel (18, 24) in der Inneneinheit (100) vorgesehen sind.

4. Klimaanlage (102) nach Anspruch 3, bei der die Inneneinheit (100) eine Anzeigeeinheit (45), die in der Lage ist, durch Leuchtmittel anzuzeigen, aufweist, wobei die Anzeigeeinheit (45) mit verschiedenen Farben auf der Grundlage des Einstellens durch die Einstellvorrichtung (18, 24) aufleuchtet.

5. Klimaanlage (102) nach einem der Ansprüche 1 bis 4, weiterhin aufweisend eine Fernsteuerung (41), wobei die Fernsteuerung (41) mit den Einstellmitteln (18, 24) versehen ist.

6. Klimaanlage (102) nach Anspruch 5, bei der die Fernsteuerung (41) eine Anzeigeeinheit (45) zum Anzeigen von Informationen aufweist, wobei die Anzeigeeinheit (45) Informationen auf der Grundlage des Einstellens durch die Einstellmittel (18, 24) anzeigt.

7. Klimaanlage (102) nach einem der Ansprüche 2 bis 6, weiterhin aufweisend:
eine Windrichtungsplatte (32), die eine Richtung eines von dem Innenventilator (12) herausgeblasenen Luftstroms ändert, und
eine Steuervorrichtung (19) enthaltend die Heizvorgangs-Zulassungs-/Untersagungs-Bestimmungsmittel (1, 25) und die Trocknungsvorgangsmenü-Bestimmungsmittel (4), welche Steuervorrichtung (19) einen Winkel der Windrichtungsplatte (32) steuert, wobei die Steuervorrichtung (19) die Windrichtungsplatte (32) während des Trocknungsvorgangs aufwärts einstellt.

8. Klimaanlage (102) nach Anspruch 7, weiterhin aufweisend einen Innentemperatursensor (33), der eine Innentemperatur erfasst, wobei die Steuervorrichtung (19) das Menü des Trocknungsvorgangs auf der Grundlage des Erfassungsergebnisses des Innentemperatursensors (33) konfiguriert.

9. Klimaanlage (102) nach einem der Ansprüche 1 bis 8, bei der die Luftvolumen-Bestimmungsmittel (11) die Drehgeschwindigkeit des Innenventilators (12) derart bestimmen, dass die Drehgeschwindigkeit der Inneneinheit (100) während des Trocknungsvorgangs ohne Heizvorgang größer als bei dem Trocknungsvorgang mit Heizvorgang ist.

## Revendications

1. Appareil de climatisation (102) capable de réaliser une opération de refroidissement et une opération de chauffage avec un cycle réfrigérant constitué par un compresseur (9), un échangeur de chaleur d'intérieur (13), une vanne de détente (16) et un échangeur de chaleur d'extérieur (14) raccordés par une tuyauterie de réfrigérant, et capable de réaliser une opération de séchage permettant de sécher une unité d'intérieur (100) constituée par 1'échangeur de chaleur d'intérieur (13) et un ventilateur d'intérieur (12) fournissant de l'air à l'échangeur de chaleur d'intérieur (13), l'appareil de climatisation (102) comprenant :
un moyen de paramétrage (18, 24) paramétrant si une opération de séchage avec opération de chauffage ou une opération de séchage sans opération de chauffage doit être réalisée,
un moyen de détermination de menu d'opération de séchage (4) déterminant un menu d'une opération de séchage sur la base d'un paramétrage du moyen de paramétrage (18, 24) ; et
un moyen de détermination de volume d'air (11) déterminant une vitesse de rotation du ventilateur d'intérieur (12) sur la base d'un résultat de détermination du moyen de détermination de menu d'opération de séchage (4) et régulant un volume d'air du ventilateur d'intérieur (12),
**caractérisé en ce que**
le moyen de détermination de menu d'opération de séchage (4)
configure l'opération de séchage en combinant une opération de chauffage et au moins l'une ou l'autre d'une opération de ventilation et d'une opération d'arrêt de ventilateur par le moyen de détermination de volume d'air (11) lorsque l'opération de séchage avec opération de chauffage est réalisée, et
configure l'opération de séchage en combinant une opération de ventilation et une opération d'arrêt de ventilateur par le moyen de détermination de volume d'air (11) lorsque l'opération de séchage sans opération de chauffage est réalisée.

2. Appareil de climatisation (102) selon la revendication 1, comprenant en outre un moyen de détermination d'autorisation/interdiction d'opération de chauffage (1, 25) stockant le paramétrage entré par le moyen de paramétrage (18, 24) et fournissant en sortie le paramétrage stocké au moyen de détermination de menu d'opération de séchage (4).

3. Appareil de climatisation (102) selon la revendication 1 ou 2, dans lequel le moyen de paramétrage (18, 24) est fourni dans l'unité d'intérieur (100).

4. Appareil de climatisation (102) selon la revendication 3, l'unité d'intérieur (100) comprenant une unité d'affichage (45) capable d'affichage grâce à un éclairage, l'unité d'affichage (45) s'éclairant de différentes couleurs sur la base du paramétrage du moyen de paramétrage (18, 24).

5. Appareil de climatisation (102) selon l'une quelconque des revendications 1 à 4, comprenant en outre une commande à distance (41), la commande à distance (41) étant dotée du moyen de paramétrage (18, 24).

6. Appareil de climatisation (102) selon la revendication 5, la commande à distance (41) comprenant une unité d'affichage (45) permettant d'afficher des informations, l'unité d'affichage (45) affichant des informations sur la base du paramétrage du moyen de paramétrage (18, 24).

7. Appareil de climatisation (102) selon l'une quelconque des revendications 2 à 6, comprenant en outre
une plaque de direction du vent (32) changeant une direction d'un air soufflé par le ventilateur d'intérieur (12), et
une unité de commande (19) incluant le moyen de détermination d'autorisation/interdiction d'opération de chauffage (1, 25) et le moyen de détermination de menu d'opération de séchage (4), l'unité de commande (19) commandant un angle de la plaque de direction du vent (32), dans lequel
l'unité de commande (19) paramètre la plaque de direction du vent (32) vers le haut pendant l'opération de séchage.

8. Appareil de climatisation (102) selon la revendication 7, comprenant en outre un capteur de température d'intérieur (33) qui détecte une température d'intérieur, dans lequel
l'unité de commande (19) configure le menu de l'opération de séchage sur la base du résultat de détection du capteur de température d'intérieur (33).

9. Appareil de climatisation (102) selon l'une quelconque des revendications 1 à 8, dans lequel le moyen de détermination de volume d'air (11) détermine la vitesse de rotation du ventilateur d'intérieur (12) de sorte que la vitesse de rotation de l'unité d'intérieur (100) pendant l'opération de séchage sans opération de chauffage soit supérieure à l'opération de séchage avec opération de chauffage.
